Europäisches Patentamt

**European Patent Office**

**Office européen des brevets**

(11) Numéro de publication: **0 133 119**
A2

## (12) DEMANDE DE BREVET EUROPEEN

(21) Numéro de dépôt: 84401528.9

(22) Date de dépôt: 19.07.84

(51) Int. Cl.⁴: **D 04 H 1/48**
B 32 B 5/26
//B62D29/04

(30) Priorité: 22.07.83 FR 8312189

(43) Date de publication de la demande:
**13.02.85 Bulletin 85/7**

(84) Etats contractants désignés:
**DE GB IT**

(71) Demandeur: **ACIERS ET OUTILLAGE PEUGEOT Société dite:**

**F-25400 Audincourt (Doubs)(FR)**

(72) Inventeur: **Gerard, André**
**5 Rue de Gerbévillers**
**F-25400 Audincourt(FR)**

(72) Inventeur: **Boichat, Olivier**
**86 Rue du Bannot**
**F-25230 Seloncourt(FR)**

(72) Inventeur: **Deval, Alain**
**45 Avenue d'Helvétie**
**F-25200 Montbeliard(FR)**

(74) Mandataire: **Moncheny, Michel et al,**
**c/o Cabinet Lavoix 2 Place d'Estienne d'Orves**
**F-75441 Paris Cedex 09(FR)**

(54) **Demi-produit destiné à la fabrication de pièces en matière thermoplastique et son procédé de fabrication.**

(57) Demi-produit destiné à la réalisation de pièces en matière plastique, notamment pour l'industrie automobile, caractérisé en ce qu'il comprend des première et secondes nappes (A, E) en matière plastique superposées entre lesquelles est disposée une charge particulaire (C) composée d'éléments de renfort fibreux et d'éléments thermoplastiques pulvérulents, et en ce que la cohésion de l'ensemble est assurée par aiguilletage.

Application à la fabrication de pièces mécaniques et de structure de la carrosserie de véhicules automobiles.

FIG.1

EP 0 133 119 A2

Demi-produit destiné à la fabrication de pièces en matière thermoplastique et son procédé de fabrication.

La présente invention concerne la fabrication de pièces en matière plastique renforcées utilisables notamment dans l'industrie automobile pour constituer des pièces mécaniques et de structure de carrosserie diverses.

A l'heure actuelle, l'utilisation des matières plastiques devient de plus en plus fréquente pour la fabrication de nombreuses pièces de carrosserie qui auparavant étaient nécessairement réalisées en métal. C'est ainsi que certains constructeurs proposent des véhicules dans lesquels les pare-chocs, les carénages de carrosserie, le support de batterie, les dossiers de siège, etc. sont réalisés dans de tels matériaux.

On connait déjà des demi-produits composés en général d'une certaine quantité de fibres de verre et d'une matière thermoplastique servant de liaison et imprégnant les fibres de verre. Ces demi-produits sont emboutissables et peuvent donc être mis en forme à chaud dans des presses dont les matrices ont la forme prédéterminée de la pièce à obtenir. Cependant, pour réaliser le demi-produit, il est nécessaire de ramollir la matière plastique de manière à imprégner les fibres de verre et assurer leur cohésion. Ensuite, le demi-produit est refroidi et lors de sa mise en forme définitive qui peut se dérouler souvent après un certain temps, il doit être de nouveau chauffé. Ce processus nécessite donc une consommation d'énergie assez élevée.

En outre, dans certains cas, il est nécessaire d'appliquer au demi-produit une opération de calandrage ce qui demande de l'énergie mécanique.

Enfin, le demi-produit connu présente souvent des dimensions standard ou est enroulé en bande de sorte que la mise en forme produit inévitablement des chutes qui constituent souvent une importante perte de matière première non recyclable.

L'invention a pour but de fournir un demi-produit qui ne présente pas les inconvénients mentionnés ci-dessus.

Elle a donc pour objet un demi-produit destiné à la réalisation par thermoformage de pièces en matière plastique, notamment pour l'industrie automobile, caractérisé en ce qu'il comprend des première et seconde nappes en matière plastique superposées entre lesquelles est disposée une charge particulaire composée d'éléments de renfort fibreux et d'éléments thermoplastiques pulvérulents, et en ce que la cohésion de l'ensemble est assurée par aiguilletage.

Un demi-produit comportant ces caractéristiques peut être réalisé entièrement à froid, ne nécessite aucun calandrage et si des chutes sont produites lors de sa mise en forme, elles peuvent facilement être recyclées sous forme d'éléments particulaires entrant dans la composition de la charge.

L'invention a également pour objet un procédé de fabrication d'un demi-produit tel que défini ci-dessus.

L'invention sera mieux comprise à l'aide de la description qui va suivre, donnée uniquement à titre d'exemple et faite en référence aux dessins annexés sur lesquels :

- la Figure 1 est une vue en perspective très schématique d'un morceau de demi-produit suivant l'invention;

- la Figure 2 est une vue schématique en élévation d'une installation de fabrication d'un demi-produit suivant l'invention;

- la Figure 3 est une reproduction photographique en coupe agrandie d'un morceau de demi-produit réalisé par la Demanderesse.

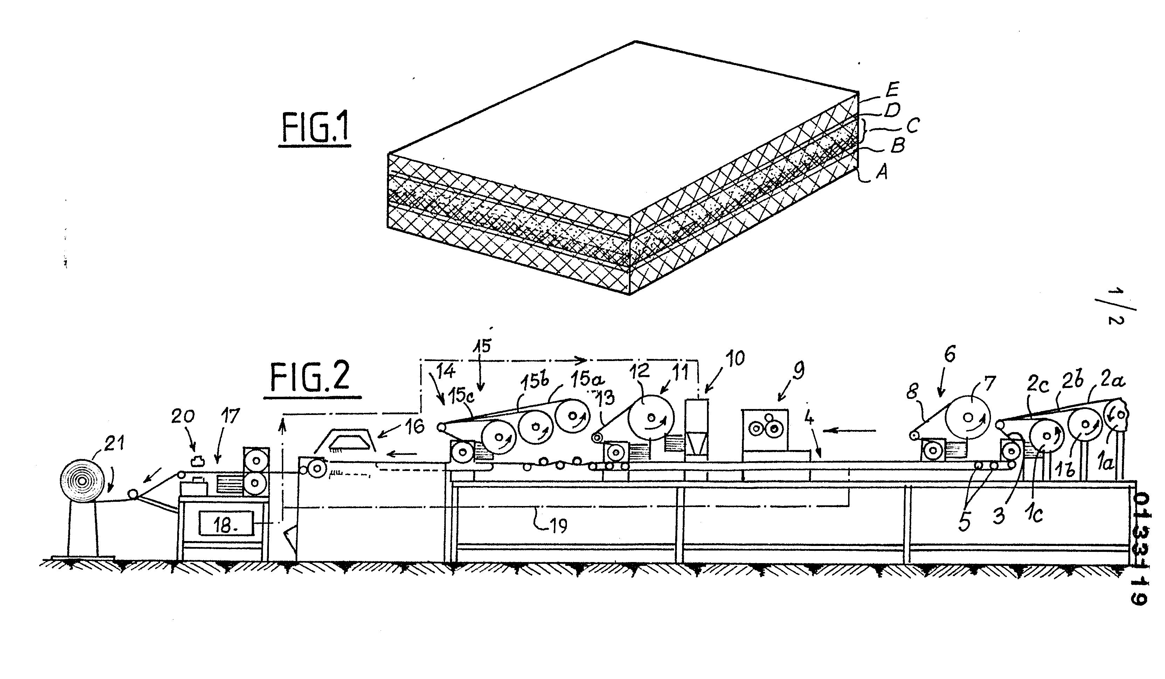

On va maintenant examiner les Figures 1 et 2 en suivant le déroulement du procédé de fabrication du demi-produit suivant l'invention. En commençant à droite de la Figure 2, on déroule tout d'abord d'une ou de plusieurs bobines de réserve 1a, 1b, 1c, une ou plusieurs bandes 2a, 2b et 2c qui sont destinées à constituer une première nappe de structure 3.

La matière d'au moins l'une des bandes 1a, 1b et 1c peut être une polyoléfine, telle que le polyéthylène ou le polypropylène, un polyester tel que le MYLAR (marque déposée) ou un polyamide. Le grammage total de la première nappe peut s'étendre entre 60 et 900 g/m$^2$. Suivant le cas, on peut prévoir plus ou moins de trois couches pour cette nappe.

De préférence, la bande 1a est une couche en matière thermoplastique comme décrit ci-dessus et peut se présenter sous la forme de fibres, de film, de mèches tissées ou non ou d'une bande fabriquée par des techniques papetières, la bande ayant un caractère de continuité sans pour autant avoir une résistance mécanique élevée à la traction.

Les bandes 1b et 1c peuvent constituer des éléments de structure proprement dits qui ont le même caractère de continuité mais qui présentent une certaine rigidité. Elles peuvent se présenter sous forme de mats, de fibres coupées ou continues, de fibres continues tissées ou non tissées ou de tissus à déposer localement. Ce dernier cas correspond à la formation de parties de structure locales renforcées. Ces renforts peuvent être débités à partir des bobines 1b et 1c de façon synchrone ou être intégrés à une structure fibreuse porteuse suivant une répartition géométrique donnée et propre à chaque pièce à obtenir à partir du demi-produit.

Le matériau des fibres apporté à partir des bobines 1b et 1c peut être du verre, du carbone, du Kevlar (marque déposée), du textile, du feutre minéral, de l'amiante ou analogues. On peut également prévoir que l'une des bobines 1b ou 1c débite une feuille de métal ajourée. Dans ce dernier cas, cette feuille de métal est de préférence débitée par la bobine 1a, les deux autres bobines étant destinées à fournir une matière thermoplastique ou une matière de structure comme indiqué ci-dessus.

D'une façon générale, la nappe de structure 3 peut être réalisée de nombreuses façons en fonction de la pièce à obtenir, la description ci-dessus n'étant donc pas limitative quant à l'ordre des bobines 1a à 1c et la nature des matières utilisées, étant entendu qu'au moins l'une des bobines débite une couche en matière thermoplastique dont la nature est celle indiquée ci-dessus.

La nappe de structure 3 ainsi constituée est déroulée sur une table de transport 4 connue en soi et composée de rouleaux 5, par exemple, qui peuvent être animés ou non.

La nappe de structure passe en dessous d'un poste 6 dans lequel est prévu une bobine d'alimentation 7 débitant une bande 8 en une matière thermoplastique. Cette bande présente une texture continue et à une épaisseur choisie de préférence entre 15 et 40 microns. La matière choisie pour cette bande est de préférence une polyoléfine. La bande 8 est destinée à venir recouvrir la nappe de structure 3 afin de former en quelque sorte, d'une part, une feuille d'"emballage" et, d'autre part, un élément permettant de conférer au demi-produit une certaine résistance à la traction. Il est à noter que la bande 8 peut être omise dans le cas où l'une des bandes 1a, 1b ou 1c de la nappe de structure 3 présente elle-même une continuité et une résistance à la traction suffisantes.

La nappe de structure 3 munie de la bande 8 de "traction-emballage" passe ensuite dans des postes 9 et 10 dans lesquels est versée une charge particulaire sur l'ensemble. Cette charge se présente sous la forme d'un produit en vrac sans cohésion, ni solidité intrinsèque.

Dans le mode de réalisation représenté, le poste 9 est un poste de coupage de fibres de renfort de longueur variable et relativement importante. Il peut s'agir de fibres de verre, de carbone, de Kevlar, de feutre et analogues. En général, il est souhaitable que la quantité de fibres apportées ainsi sur la bande d'emballage 4 constitue de 20 à 50% en poids du demi-produit obtenu.

Le poste 10 est destiné à verser sur l'ensemble ainsi obtenu des éléments thermoplastiques pulvérulents, par exemple à partir d'une trémie vibrante, connue en soi.

Les éléments pulvérulents comportent tout d'abord une poudre thermoplastique notamment à base de polyoléfines tel que le polypropylène ou le polyéthylène et peut être un matériau standard disponible dans le commerce. A cette poudre peut être rajoutée une certaine quantité de carbonate de calcium, de noir de carbone ou autre, c'est-à-dire une ou des matières inertes qui se présentent également sous forme d'éléments pulvérulents. Par ailleurs, certains additifs chimiques peuvent être déversés par le poste 10. Par exemple, on peut utiliser des peroxydes, des agents de liaison chimique tels que des dérivés d'acide acrylique ou d'anhydrique maléique. Ces produits agissant à chaud, ne sont actifs que lors de l'utilisation du demi-produit et de sa mise en forme ultérieure.

Le poste 10 peut également déverser une certaine quantité de matière stabilisante, des antioxydants ou des matières anti-UV dans des proportions qui sont bien connues des spécialistes. A titre d'exemple, on peut prévoir entre 0 et 1% en poids de peroxyde et entre 0 et 4% en poids d'agents de liaison, rapportés sur le poids total du demi-produit fini. La quantité totale de la matière pulvérulente peut être située entre 400 $g/m^2$ et 1800 ;$g/M^2$.

Le poste de déversement 10 est suivi d'un second poste 11 débitant une bande de "traction-emballage" 13. Ce poste comporte une bobine débitrice 12 d'où est déroulé la bande 13 qui recouvre donc le composite formé préalablement sur la chaîne de fabrication. Le poste 11 est suivi d'un poste 14 d'application d'une seconde nappe de structure 15 qui peut également être composée de plusieurs couches 15a, 15b et 15c. Les compositions de la bande 13 et de la nappe 14 sont semblables à celles de la nappe 3 et de la bande 8, respectivement, toutes les variantes étant cependant possibles.

Le complexe ainsi obtenue est conduit dans un poste d'aiguilletage 16 de conception classique qui outre son travail classique d'aiguilletage assure également l'avance pas à pas du complexe sur la table de transport 4. Le pas d'aiguilletage règle le pas de défilement du produit dans le sens indiqué par les flèches sur la Figure 2. A titre indicatif, le complexe peut subir entrer 20 et 80 coups/cm$^2$. L'aiguilletage peut être du type simple ou double, le nombre de coups pouvant être réglé à volonté par unité de surface du complexe. Cette opération a pour but de relier entre elles les structures fibreuses du complexe c'est-à-dire les éléments particulaires et les couches des nappes de structure en les déplaçant par rapport à leur position initiale, d'une façon désordonnée dans le sens vertical.

L'opération d'aiguilletage a pour effet :

1) de crever les bandes de "traction-emballage" 8 et 12, ce qui permet que, lors de la mise en forme du demi-produit par chauffage, les matières thermoplastiques, en fondant, les traversent et les noyent en provoquant leur adhésion avec les structures fibreuses. Par conséquent, après l'opération d'aiguilletage, les bandes 8 et 12 deviennent des sortes de grilles qui ne constituent plus d'obstacle retardant, en raison de leur temps de fusion, la répartition des matières pulvérulentes déversées par le poste 10 et qui sont emprisonnées par ces bandes.

2) Les éléments fibreux enfermés entre les bandes de "traction-emballage" sont imbriqués, les fibres extérieures étant amenées vers l'intérieur et les fibres intérieures vers l'extérieur. Ainsi on compense la diminution de résitance des bandes de "traction—emballage" 8 et 12.

3) Elle évite que les éléments particulaires puissent traverser les trous d'aiguille qui sont pratiqués dans les nappes de structure et dans les bandes 8 et 12 en évitant ainsi toute perte de ces éléments lors de la manipulation du demi-produit.

4) Elle produit une régularisation de la répartition des éléments particulaires sur toute la largeur du complexe.

A la sortie du poste d'aiguilletage 16, le demi-produit passe dans un poste 17 de coupe de lisières dans lequel deux trains latéraux de molettes classiques coupent les bords du complexe.

Les déchets ainsi obtenus peuvent, après avoir été recueillis et traités dans un broyeur déchiqueteur 18, être transportés par tout procédé classique (air comprimé, lit fluidisé, vis d'Archimède) vers le poste 10 pour être incorporé aux éléments pulvérulents qui constituent une partie de la charge. De même, les éléments particulaires qui sont perdus latéralement au cours du transport du complexe sur la table 4 peuvent être recueillis dans un collecteur 19 situé en-dessous de cette table, la sortie de ce collecteur étant connectée également au poste de déversement 10.

Le poste de découpe des lisières 17 peut être suivi d'un poste de contrôle 20 permettant de surveiller certains paramètres du demi-produit obtenu, par tout procédé connu.

Enfin, le demi-produit terminé est recueilli par exemple sur une bobine réceptrice 21.

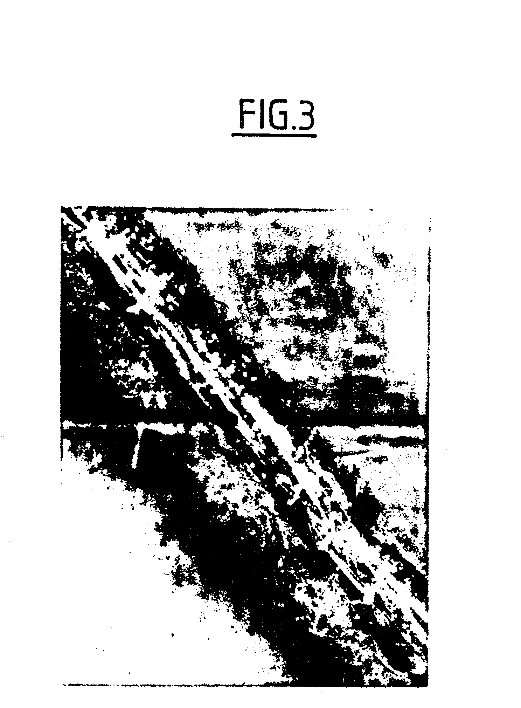

Comme représenté à la Figure 1, ce demi-produit comporte donc une première nappe de structure A, une première couche de "traction-emballage" B, une couche C composée d'éléments particulaires aiguilletés, cette charge particulaire comportant des éléments fibreux et des éléments pulvérulents, une seconde couche de "traction-emballage" D et une seconde nappe de structure E. Bien entendu, l'aspect du produit n'est pas tout aussi régulier que celui représenté à la Figure 1 qui n'est qu'une représentation schématique. Au contraire, comme on peut le voir sur la représentation photographique de la Figure 3, l'ensemble du demi-produit est en fait un enchevêtrement des éléments que l'on vient de mentionner, seules restant indépendamment visibles les deux couches d'emballage qui, sur la Figure 3 apparaissent en noir.

Suivant une variante, il est possible d'adjoindre au produit par exemple entre les postes 9 et 10, par des bobines débitrices analogues à celles des postes 6 et 11, un matelas de fibres ou une couche de métal ajourée afin de renforcer la structure de l'ensemble.

Exemple 1 :

On a fabriqué une pièce de structure destinée au carénage du dessous d'un véhicule automobile. La composition du demi-produit destiné à la fabrication de cette pièce était la suivante en pourcentage en poids total du demi-produit en question.

Fibres de verre : 30% Carbonate de calcium : de 4 à 6% Noir de carbone (coloration) : 0,1% Peroxyde : 0,1 à 0,5% Agent de liaison : 0,1 à 0,5% Résine de polypropylène : 65% Couches de "traction-emballage" en polyéthylène : 1%

Exemple 2 :

On a réalisé également un cache-culbuteurs destiné à un moteur de véhicule automobile, cette pièce résistant à une température supérieure à 130°C. La composition du demi-produit destinée à l'obtention de ce produit était identique à celle de l'exemple 1 à ceci près que l'on a utilisé 40% de fibres de verre et 55% de poudre de polyamide pour la charge.

On peut, à l'aide du demi-produit suivant l'invention réaliser un grand nombre de pièces, de natures diverses et notamment des pare-chocs, des carénages de carrosserie, des supports de batterie, des dossiers de siège, des cache-culbuteurs, des pédales et leur support, des supports du groupe moto-ventilateur, etc.

REVENDICATIONS

1 - Demi-produit destiné à la réalisation de pièces en matière plastique, notamment pour l'industrie automobile, caractérisé en ce qu'il comprend des première et secondes nappes (A, E) en matière plastique superposées entre lesquelles est disposée une charge particulaire (C) composée d'éléments de renfort fibreux et d'éléments thermoplastiques pulvérulents, et en ce que la cohésion de l'ensemble est assurée par aiguilletage.

2 - Demi-produit suivant la revendication 1, caractérisé en ce qu'au moins une couche de "traction-emballage" (B, D) en matière plastique et à texture continue est interposée au moins entre la charge (C) et la première et/ou la seconde nappes de structure (A, E).

3 _ Demi-produit suivant la revendication 1, caractérisé en ce que la première et/ou la seconde nappes de structure (A, E) comportent au moins une couche dont la texture est continue et capable de s'opposer au passage desdits éléments particulaires (C).

4 _ Demi-produit suivant l'une quelconque des revendications 1 à 3, caractérisé en ce qu'au moins l'une des nappes de structure (A, E) comporte une couche en une matière thermoplastique telle qu'une polyoléfine et de préférence du polyéthylène ou du poypropylène.

5 - Demi-produit suivant l'une quelconque des revendications 1 à 4, caractérisé en ce que l'une au moins des couches de la première et/ou de la seconde nappes de structure (A, E) se présente sous la forme de fibres, de film, de mèches tissées ou non tissées et/ou d'une bande fabriquée par des techniques papetières.

6 - Demi-produit suivant l'une quelconque des revendications 1 à 5, caractérisé en ce que l'une au moins des couches de la première et/ou de la seconde nappes de structure (A, E) se présente sous la forme de mats, de fibres coupées ou continues, de fibres continues tissées ou non tissées.

7 - Demi-produit suivant l'une quelconque des revendications 1 à 6, caractérisé en ce que l'une au moins des couches de la première et/ou de la seconde nappes de structure (A, E) n'est présente que localement dans la nappe correspondante.

8 - Demi-produit suivant l'une quelconque des revendications 5 à 7, caractérisé en ce que le matériau des fibres dans lesdites nappes est du verre, du carbone, du feutre minéral et/ou de l'amiante.

9 - Demi-produit suivant l'une quelconque des revendications 1 à 8, caractérisé en ce qu'au moins l'une des nappes de structure (A, E) comporte une feuille de métal ajourée.

10 - Demi-produit suivant l'une quelconque des revendications 2 à 9, caractérisé en ce que la ou les couches de "traction-emballage" (B, D) sont réalisées en une résine de polyoléfine.

11 - Demi-produit suivant l'une quelconque des revendications 1 à 10, caractérisé en ce que la matière desdits éléments fibreux de la charge (C) est choisie parmi les fibres de verre ou de carbone et les feutres.

12 - Demi-produit suivant l'une quelconque des revendications 1 à 11, caractérisé en ce que les éléments pulvérulents de ladite charge (C) comportent une poudre en une résine de polyoléfine, de préférence du polypropylène ou du polyéthylène.

13 - Demi-produit suivant la revendication 12, caractérisé en ce que les éléments pulvérulents de ladite charge (C) comportent également des matières inertes telles que le carbonate de calcium et le noir de carbone.

14 - Demi-produit suivant l'une quelconque des revendications 12 et 13, caractérisé en ce que les éléments pulvérulents de ladite charge (C) comportent également des additifs chimiques tels que le peroxyde et/ou des agents de liaison tels que l'acide acrylique ou l'anhydride maléique.

15 - Procédé pour la fabrication du demi-produit tel que défini dans l'une quelconque des revendications 1 à 14, caractérisé en ce qu'il consiste à dérouler une première nappe de structure (1a, 1b, 1c) en matière plastique, à déverser sur cette première nappe une charge (9, 10) d'éléments particulaires composés d'éléments fibreux et d'éléments thermoplastiques pulvérulents et à dérouler une seconde nappe de structure (15a, 15b, 15c) par dessus ladite charge (9, 10) et à soumettre le complexe ainsi obtenu à une opération d'aiguilletage.

16 - Procédé suivant la revendication 15, caractérisé en ce que, préalablement au déversement de ladite charge (9, 10), on recouvre la première nappe (1a, 1b, 1c) d'une couche de "traction-emballage" (8) en une matière thermoplastique de texture continue.

17 - Procédé suivant l'une quelconque des revendications 15 et 16, caractérisé en ce que préalablement à la mise en place de ladite charge par ladite seconde nappe de structure, on recouvre ladite charge d'une seconde couche de "traction-emballage" (13).

18 - Procédé suivant l'une quelconque des revendications 15 à 17, caractérisé en ce que, après aiguilletage, le complexe obtenu est soumis à une opération de découpe de lisières (17), les chutes découpées étant recyclées après broyage (18) et incorporées à ladite charge.

FIG.1

FIG.2

0133119

## FIG.3